# EUROPEAN PATENT APPLICATION

(11) **EP 2 610 805 A1**
(43) Date of publication of application: **03.07.2013**
(21) Application number: 12196932.3
(22) Date of filing: 13.12.2012
(51) Int. Cl.: G06Q 30/02

(54) **Retail system with location-based customization**

(30) Priority: 30.12.2011 US 201113340870
(71) Applicant: Adidas AG, 91074 Herzogenaurach (DE)
(72) Inventor: Page, Alison, 90419 Nürnberg (DE); Clas, Philip, 90489 Nürnberg (DE); Bodiant, Stephanie, 75002 Paris (FR)
(74) Representative: Wegner, Hans

(57) **Abstract**

Described are retail systems including a device and one or more processors in communication with the device. The retail systems retrieve user information from the device, which may include location information, date, time, and or fitness data. The retail systems determine the location of the user or attendance of the user at an event based on the user information and transmit a list of specials based at least in part on the user location, event attendance, or fitness data to the device.

## Description

### CROSS-REFERENCES TO RELATED APPLICATIONS

This application incorporates by reference the disclosures of two copending U.S. patent applications. These copending U.S. patent applications are "Offering A Customized Collection of Products," filed by Alison Page, U.S. Application Serial No. _________, filed on December 30, 2011, and "Customization Based on Physiological Data," filed by Alison Page, U.S. Application Serial No. _____________, filed on December 30, 2011. The disclosures of each of these two applications are hereby incorporated herein in their entireties by this reference.

### FIELD OF THE INVENTION

The invention relates to retail systems or the like.

### BACKGROUND

With the technological advances in mobile communication and computing devices, these devices have become very popular due to the conveniences they provide to people. People routinely carry such devices with them, so that they are available for use at any time, regardless of whether a person is at home, work, or traveling. In addition to mobile telephony applications, many of these devices have interactive capabilities that may be accessed to provide location information about the device.

People often use the interactive capabilities of such devices to search for products or retail locations. Traditionally, these devices access a retail location's general or mobile website, where the user then has to navigate the site in order to identify retail location information and/or search through a catalog of products to determine which of those products are available for purchase in her location.

It may be desirable to provide a location-based user interface that automatically provides a list of retail locations that are in the predefined radius of a user's device and/or a list of products that are available in the predefined radius of the device, based on location information obtained from the device, to improve the efficiency of identifying and locating such items and locations. It may also be desirable to provide customization features through such a user interface that are accessible only in certain locations, dates, and/or times based on information obtained from the user's device. Customized sporting products, such as customized sporting apparel and customized sporting equipment, can provide significant benefits when undertaking a wide variety of activities. For example, customized sporting items can help people adapt to different environmental conditions. For some activities, customized sporting items can contribute to, and even enhance, performance. For example, customizing the size of a sporting item to an individual user, e.g. to the specific size, weight or body measurements of an athlete, results in a sporting item that has an optimal fit for this particular athlete, thereby leading to an improved usability during a sports activity and hence to improved performance of the athlete.

### BRIEF SUMMARY

Various embodiments of the invention relate to a retail system comprising a device and one or more processors in communication with the device. In certain embodiments, the retail system retrieves user information from the device, analyzes the user information retrieved from the device to determine a user location, and may also retrieve time and date information from the device to determine attendance of the user at an event. In some embodiments, the retail system also retrieves fitness data of the user from a storage location.

In these embodiments, the retail system transmits a list of one or more available specials based at least in part on the user location to the device. In some embodiments, the list of specials comprises at least one product or at least one customization feature. In particular, basing customization options of a product on physical parameters such as a person's current geographical location, fitness data or time and date information serves for an even better customization of the product to an individual, thereby leading to an even more improved usability during a sports activity and hence to improved performance of the athlete. In certain embodiments, the list of available specials is further based on the attendance of the user at the event. In yet other embodiments, the list of available specials may be based on the combination of the location of the user and the fitness data or may be based on the combination of the attendance of the user at the event and the fitness data.

In some embodiments, the retail system transmits a collection of products to the device. The retail system may also receive a selection of at least one product from the collection of products and a selection of at least one customization feature for the product.

The retail system may incorporate the customization feature into the product and tangibly store the customized product in memory. In some embodiments, the retail system may complete a settlement transaction to complete a user purchase of the customized product.

### BRIEF DESCRIPTION OF THE DRAWINGS

FIG. 1 is a simplified block diagram of aspects of a retail system network, according to embodiments of the invention.

FIG. 2 is a simplified flow diagram illustrating a method for creating a user interactive environment on a retail system, according to embodiments of the invention.

FIG. 3 is a simplified diagram illustrating some available features in a user interactive environment of a retail system, according to embodiments of the invention.

FIG. 4 is a diagram of a computer apparatus, according to certain exemplary embodiments.

FIG. 5 illustrates an example user interface for a device that identifies a retail location and prompts a user to check in at that location.

FIG. 6 illustrates an example user interface for a device that identifies a customized list of specials and prompts a user to view the list.

FIG. 7 illustrates an example user interface for a device that identifies a customization feature and prompts a user to add the feature to a product.

FIG. 8 illustrates an example user interface for a device that identifies multiple customization features of a selected product and prompts a user to select a feature to customize.

FIG. 9 illustrates an example user interface for a device that identifies multiple customization features of a selected product and prompts a user to select a feature to customize.

FIG. 10 illustrates a user viewing a collection of products in a retail location.

FIG. 11 illustrates a user viewing a tag associated with a selected product and/or the retail location of FIG. 10.

FIG. 12 illustrates a user using a device to scan the tag of FIG. 11.

FIG. 13 illustrates an example user interface for a device that identifies a list of available specials and/or products associated with the tag of FIG. 11 and prompts a user to view the list.

FIG. 14 illustrates an example user interface for a device that indicates that the list of available specials and/or associated with the tag of FIG. 11 is being downloaded to the device.

FIG. 15 illustrates an example user interface for a device that identifies a list of available customization features for the product associated with the tag of FIG. 11 and prompts a user to select a feature to customize.

FIG. 16 illustrates an example user interface for a device that identifies a user's location.

FIG. 17 illustrates an example user interface for a device that identifies a retail location and prompts a user to visit the retail location to check in and unlock a list of available specials and/or products.

FIG. 18 illustrates a user visiting the retail location identified in FIG. 17.

FIG. 19 illustrates an example user interface for a device that confirms when a user has checked in at the retail location identified in FIG. 17.

FIG. 20 illustrates an example user interface for a device that identifies a list of available specials and/or products and prompts a user to view the list.

FIG. 21 illustrates an example user interface for a device that displays the list of available specials and/or products identified in FIG. 20.

### detailed description

Various embodiments of the invention relate to a retail system comprising a device and one or more processors in communication with the device. In some embodiments, the retail system retrieves user information from a device, analyzes the user information retrieved from the device to determine a user location, and may also retrieve time and date information from the device to determine attendance of the user at an event, as well as fitness data of the user from a storage location.

In these embodiments, the retail system transmits a customized list of one or more available specials to the device, which may include products or features that are unique to the location, event, or fitness achievements. The retail system may also transmit a collection of products to the device. The retail system may receive a selection of at least one product. The retail system may also receive a selection of at least one customization feature for the at least one product. The retail system may incorporate the customization feature into the product and tangibly store the customized product in memory. The retail system may also complete a settlement transaction to complete a user purchase of the customized product.

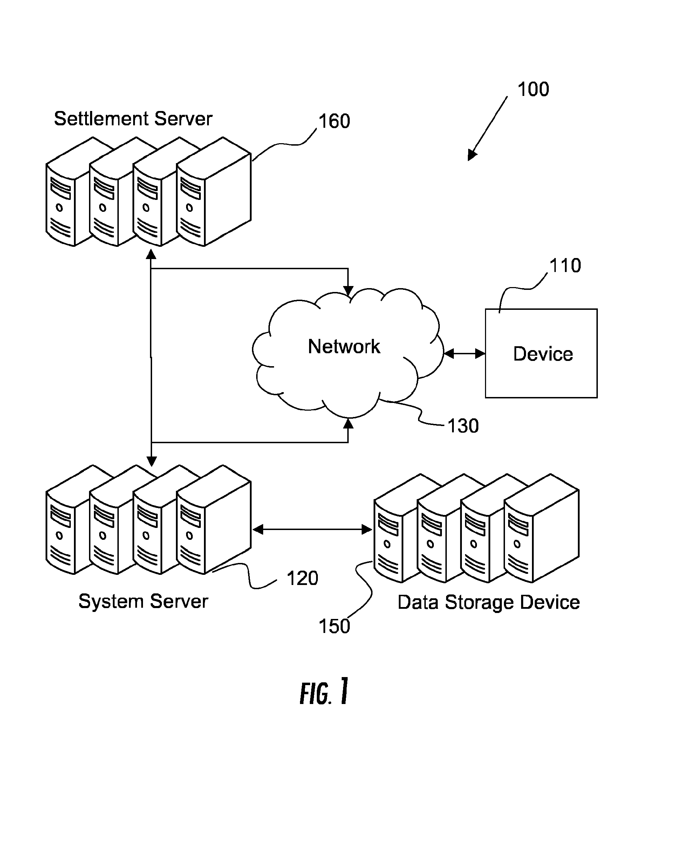

FIG. 1 is a simplified block diagram of a retail system 100, according to certain embodiments of the invention. The retail system 100 comprises a device 110, a system server 120, and a network 130.

The system server 120 can control the hardware and software operations of the retail system 100. According to certain embodiments, the system server 120 provides various data processing, networking, and management functions.

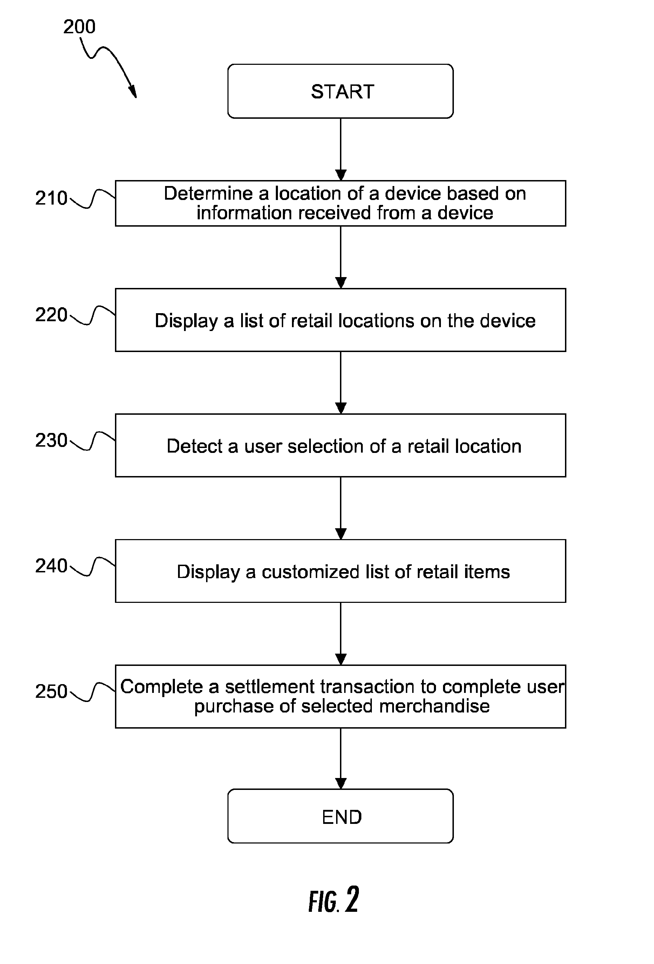

In operation, the system server 120 provides a user interface 140 that allows a user to browse, select, research, and/or purchase one or more products from a collection of products 190. In some embodiments, the collection of products 190 may include a single product or may include more than one product. In certain embodiments, a data storage device 150 stores images and information (e.g., marketing, technical, and pricing information, etc.) of the collection of products 190, as well as information regarding various retail locations 180 that may offer the collection of products 190. In some embodiments, the data storage device 150 is located within the system server 120. The details of the retail system 100 and the user interface 140 are further discussed below and depicted in FIGS. 2-3.

According to certain embodiments, the system server 120 may transmit the user interface 140 to perform a variety of retail functions. For example, the system server 120 can retrieve user information (including location, date, time, and fitness information) from the device 110 and/or the user and respond by transmitting a list of specials (which may include unique products and/or unique customization features), receive selections of products 190 with selected customization features and respond by incorporating the selected customization features into the selected products 190 and performing a settlement transaction or reserving the selection at a retail location 180. The device 110 may be any device having the ability to communicate information. Examples of such devices 110 include but are not limited to cell phones, smart phones, personal communication service ("PCS") telephones, personal digital assistants ("PDAs"), palmtop computers, laptops/notebooks, tablet computers, handheld video games, multimedia enabled devices, mobile desktop/workstation computing device, wireless modems, digital still/video cameras, handheld devices that include short range radios (such as IEEE 802.11 or Bluetooth® but do not have cellular phones), or other similar electronic devices that are network capable.

The device 110 may perform a settlement transaction (i.e., purchase of products 190) with a settlement server 160 through the retail system 100. The settlement server 160 performs the settlement transactions with the device 110 to complete a sale. Settlement transactions involving credit cards, debit cards, prepaid cards, and the like are known by those of ordinary skill in the relevant art. The operations and protocols of settlement transactions are not discussed in detail herein to avoid obfuscation of the novelty and focus of the invention, but are known to those of ordinary skill in the relevant art.

The system server 120 typically includes an operating system that provides executable program instructions for the general administration and operation of that server, and typically includes a computer-readable medium tangibly storing instructions that, when executed by a processor of the server, allow the server to perform its intended functions. Suitable implementations for the operating system and general functionality of the servers are known or commercially available, and are readily implemented by persons having ordinary skill in the relevant art, particularly in light of the disclosure herein.

The retail system 100 in certain embodiments is a distributed computing environment utilizing several computer systems and components that are interconnected via communication links, using one or more computer networks or direct connections. However, it will be appreciated by those of ordinary skill in the art that such a system could operate equally well in a system having fewer or greater number of components than are illustrated in FIG. 1. Thus, the depiction of the retail system 100 in FIG. 1 should be taken as being illustrative in nature, and not limiting to the scope of the disclosure.

Examples of networks 130 include but are not limited to global positioning systems (e.g., "GPS"), cellular (e.g., 2G, 3G, 4G), WLAN 802.11, Bluetooth®, Radio-Frequency Identification (RFID), Worldwide Interoperability for Microwave Access (WiMax), HD Radio™, Ultra-wideband (UWB), ZigBee, and 60 GHz, and other similar networks capable of providing the necessary display, user interface, and input capabilities, as will be described in more detail below. The device 110 can communicate with one or more of these networks. For example, the communication can be downlink from the network base-station (such as satellites, WLAN or Bluetooth® base-stations, cellular towers, etc.) to the device 110 or vice versa.

The user interface 140 allows the user to access the collection of products 190. In some embodiments, the user interface 140 also provides the user with a variety of customization features to further customize the collection of products 190, which may be displayed as a product configurator. Through the product configurator, the user may change the design features of the product 190 (e.g., color, print, stitching color, embroidery), functional features (e.g., type of lacing, substitute Velcro® in place of lacing), materials, elements (e.g., high heel or low toe), and/or combine features of different products 190.

The user interface 140 may be provided and controlled by the system server 120 or by the device 110. The data associated with generating, maintaining, and receiving input through the user interface 140 may be generated and provided via computer readable media included or associated with the device 110 and/or the system server 120. Examples of computer readable media include but are not limited to hard drives, disks, flash memory devices, or other similar devices. Software associated with the user interface 140 may be located on the device 110, the system server 120, or a combination thereof. For example, the user interface 140 may be an application that is stored on the device 110, the data storage device 150, a website server, or other suitable location that places the device 110 in communication with the system server 120. The user interface 140 serves as the gateway through which at least portions of the services and products 190 are offered to the user.

When the user accesses the user interface 140, the user may be prompted to open a user account and log in to the system server 120. The user account may provide the system server 120 with additional user information and/or age, gender, or other demographic statistics to better determine an appropriate selection of products 190 and information to transmit to the user interface 140. For example, the user's purchase history may include size, model, color, and design for shoes and apparel, as well as purchase trends. In some embodiments, the data storage device 150 stores user customization preferences for both the products 190 and various settings that may be transmitted through the user interface 140. For example, the user interface 140 may have a variety of display options, styles, or configurations. The user interface 140 may be configured to automatically adapt to the user's preferred configuration when the user logs in to the system. In a further embodiment, the system server 120 may track user behavior and adapt marketing and transmissions based on user responses to new and existing products.

In some embodiments, the data storage device 150 may also store payment information for the user, including but not limited to credit card, debit card, prepaid card, or other similar payment method information, transaction data, and/or membership information for the user. In some embodiments, this information may be stored as part of the user account.

In certain embodiments, the data storage device 150 may also store membership information for the user, including but not limited to sports teams, clubs, professional organizations, alumni associations, current schools, academic teams, and other preferences. In some embodiments, this information may be stored as part of the user account.

In some embodiments, the user account may be used to track additional data, such as fitness-related information. For example, the user may provide information regarding finish times in certain races, weight loss, strength training, points scored during games, or other fitness achievements. In other embodiments, the user may provide information through the user account regarding how to access additional information stored on the device 110, other websites, databases, or other electronic media. In some cases, the user interface 140 may offer the user a collection of "specials" that are only available when certain conditions are satisfied. For example, the specials may include unique customization features and/or unique products 190 that are only offered when the user meets certain criteria, such as being within a predefined location, attending a selected event, achieving certain fitness milestones, satisfying other predefined metrics, or a combination thereof.

The types of products 190 that may be offered in combination with the retail system 100 include but are not limited to apparel, shoes, caps, socks, helmets, bags, balls, equipment such as golf clubs, surfboards, skateboards, bats, pads, rackets, sticks, or other types of products such as furniture, electronic devices, jewelry, purses, and the like. One of skill in the relevant art will understand that the types of products 190 that may be offered in combination with the retail system 100 may include any type of product that is capable of incorporating features unique to a location, event, or other fitness or athletic achievements.

The collection of specials may be stored in the data storage device 150. The data storage device 150 may also store one or more conditions that are required to access each special within the collection of specials.

FIG. 2 is a simplified flow diagram illustrating a method 200 for creating a user interactive environment on a retail system 100, according to certain embodiments of the invention. The method 200 is performed by processing logic that may comprise hardware (circuitry, dedicated logic, etc.), software (such as is run on a general purpose computing system or a dedicated machine), firmware (embedded software), or any combination thereof. In certain embodiments, the method 200 is performed by one or more processors in the retail system 100 of FIG. 1. In certain embodiments, the method 200 is performed by, or in conjunction with, processors located in a cloud server.

Referring to FIG. 2, the method 200 includes the step 210, in which the system server 120 may retrieve user information from the user, the device 110, and/or other storage locations. As a prerequisite to the step 210, when the system server 120 is contacted by the device 110, the system server 120 may prompt the user to "check in" via the user interface 140, which authorizes the system server 120 to retrieve information from the user, the device 110, and/or other storage locations, which is needed to search for specials that may be available and to provide the user with a list of available specials. In other embodiments, the user interface 140 may include an icon that allows the user to prompt the system server 120 to retrieve information from the user, the device 110, and/or other storage locations, which is needed to search for specials that may be available and to provide the user with the list of available specials.

At step 220, the system server 120 may determine the user's location based on information retrieved from the user, the device 110, and/or other storage locations. As a further step, the system server 120 may further determine the user's attendance at an event based on the user's location in combination with date and/or time information retrieved from the device 110 and/or calculated by the system server 120 in conjunction with when the user's location was determined.

At step 230, as described in more detail below, the system server 120 may compile a list of available specials, which may include a single special or more than one special, based on the user information, such as location, attendance at specified events, and/or additional information. At step 240, as described in more detail below, the system server 120 may transmit the list of available specials to the device 110 and display them through the user interface 140. At step 250, the system server 120 may transmit a collection of products 190, which may include a single product 190 or more than one product 190, to the device 110 and display them through the user interface 140. At step 260, the system server 120 may complete a settlement transaction to complete a user purchase of the selected product(s) 190.

Referring again to step 220, in these embodiments, the system server 120 may determine the user's location and/or attendance at selected events through a variety of methods, including but not limited to calculations based on coordinate signals, sales data, transaction data, membership data, retail location selection, or other suitable methods, which are discussed in detail below. One of ordinary skill in the relevant art will understand that the system server 120 may use any or all of the methods, alone or in combination, to determine the user's location and/or attendance at an event.

### Location/Attendance Based On Coordinate Signals

In some embodiments, the user's location is calculated based on coordinate signals related to the device 110. In some embodiments, the device 110 may receive the coordinate signals from the network 130 and process the coordinate signals into a location estimate. Examples of the information used to calculate the location estimate include but are not limited to GPS signals, Received Signal Strength Indicator ("RSSI"), Angle of Arrival ("AOA"), Time of Arrival ("TOA"), Time Difference of Arrival ("TDOA"), and Doppler shift. The operations and protocols of locations estimates are not discussed in detail herein to avoid obfuscation of the novelty and focus of the invention, but are known to those of ordinary skill in the relevant art.

In other embodiments, the system server 120 may perform the calculations to generate a location estimate based on the coordinate signals provided by the device 110 through the user interface 140. For example, the system server 120 may receive GPS signals, RSSI, Angle of Arrival AOA, Time of Arrival TOA, TDOA, and Doppler shift information from the device 110, which the system server 120 then uses to perform its own location estimate. Alternatively, the system server 120 may access other types of coordinate signals from the device 110 to calculate the location estimate, including but not limited to latitude and longitude coordinates, orientation, altitude, bearing, distance, place names, or other similar information.

The system server 120 may combine the location information provided by the coordinate signals with date and time information to determine whether the user is within a predefined radius of an event location at the scheduled date and time of the event. If the system server 120 determines that the location, date, and time information correspond to event information stored in the data storage device 150, the system server 120 may determine that the user is attending the event.

### Location/Attendance Based On Sales Data

In certain embodiments, the user's location is determined from sales data. For example, the user may purchase a ticket for an event. A Quick Response code ("QR code") 170 or other special code may be printed on the ticket. When the user scans the QR code 170 with the device 110 or otherwise activates the code, the information is transmitted to the system server 120 through the user interface 140. The system server 120 may then determine that the user's location corresponds to the location where the ticket was purchased.

Furthermore, if the system server 120 determines that the date and time that the code information is scanned corresponds to event information stored in the data storage device 150, the system server 120 may determine that the user is attending the event.

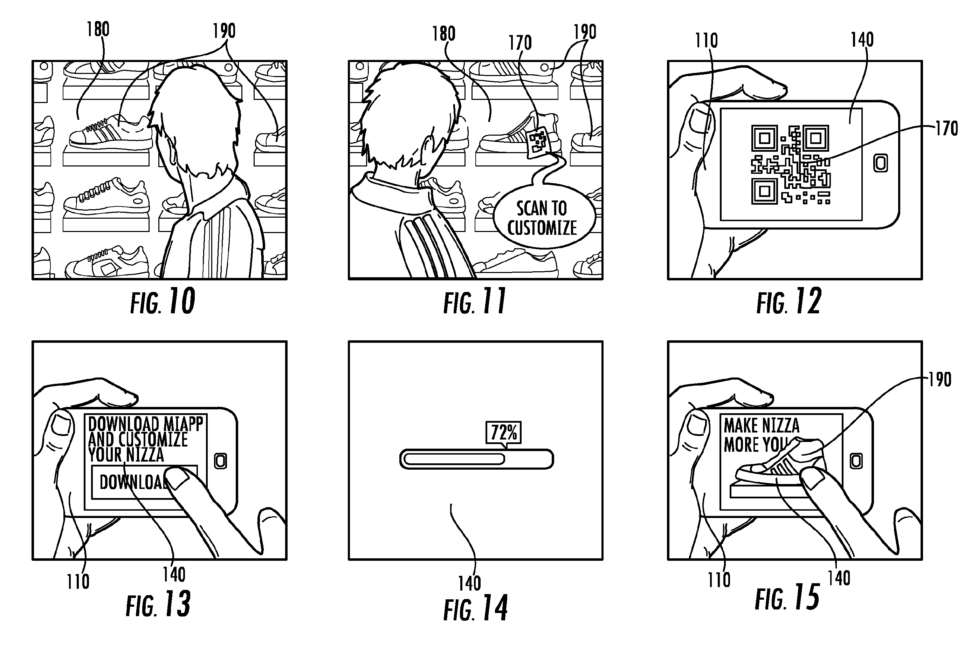

In some embodiments, as illustrated in FIGS. 10-15, the QR code 170 may be printed on a tag associated with the product 190 in a retail location 180. For example, certain retail locations 180 may have unique QR codes 170 that are added to certain products 190 available within that retail location 180 and/or within that general geographic region. A user may scan the QR code 170 with the device 110 or otherwise activate the code while viewing the product 190 in the retail location 180, wherein the information is transmitted to the system server 120 through the user interface 140. The system server 120 may then determine that the user's location corresponds to the retail location 180 that is linked to the QR code 170. As a further step, as shown in FIGS. 13-15, the system server 120 may compile a list of available specials for the selected product 190 based on the scanned QR code 170, as described in more detail in step 230, and transmit the list of available specials to the device 110 and display them through the user interface 140, as described in more detail in step 240. The list of available specials may also include features that are fitness or performance related as well. The user may then customize the product 190 and order his creation, as described in more detail in step 260.

### Location/Attendance Based On Transaction Data

In some embodiments, the system server 120 may retrieve information regarding recent transaction activity by the user to determine the location of the device 110. These embodiments may include payments made via the device 110, credit card, debit card, or other similar payment methods. For example, in the embodiments where the transactions are performed via the device 110, recent transaction history information may be stored locally on the device 110. When the user contacts the system server 120, the system server 120 may retrieve that transaction history information from the device 110 through the user interface 140. Alternatively, if the user provides credit card, debit card, or prepaid card information to the system server 120 through the user interface 140 or accesses the system server 120 via the user account where the payment information is stored, the system server 120 may access the settlement server 160 or other servers to retrieve information regarding recent transactions related to the payment information.

If the transaction information includes location information (such as the location where the transaction occurred) and/or indicates that the transaction occurred within a predefined period of time, the system server 120 may determine that the user's location corresponds to the transaction location. Furthermore, if the location, date, and time information correspond to event information stored in the data storage device 150, the system server 120 may determine that the user is attending the event.

### Location/Attendance Based On Membership Data

In some embodiments, the system server 120 may retrieve user membership information to determine the location of the device 110. In these embodiments, the user may be a member of a certain team, group, club, class, organization, or other type of affiliation.

In some embodiments, the membership information may be stored locally on the device 110. When the user contacts the system server 120, the system server 120 may retrieve that information from the device 110 through the user interface 140. Alternatively, the user may provide membership information directly to the system server 120 via the user account. For example, when setting up the user account, the user may have been prompted to provide membership information. When the user then logs into the user interface 140, the system server 120 accesses the membership information stored in the user account.

Alternatively, the data storage device 150 or other storage location may include membership rosters for various affiliations. The system server 120 may compile a list of affiliations stored on the data storage device 150 or other storage location, transmit the list of affiliations to the device 110 and display them through the user interface 140, and prompt the user to select any memberships that apply. Once the system server 120 receives the selections, the system server 120 may then compare the selections and the user's name or other identifying information to the membership rosters for the selected affiliations stored on the data storage device 150 or other storage location. If the user information corresponds to a member listed on each roster of the selected affiliations, the system server 120 determines that the user is a member of the selected affiliations. In other embodiments, the user's selection of affiliations may be sufficient to determine that the user is a member of the selected affiliations.

In yet other embodiments, the system server 120 may not prompt the user to select an affiliation, but may instead automatically compare the user's name or other identifying information to the membership rosters for all affiliations stored on the data storage device 150 or other storage location. If the user information corresponds to a member listed on the roster of one or more affiliations, the system server 120 determines that the user is a member of those affiliations.

The user's membership may then be used to determine the user's location and or attendance at an event. In some cases, the affiliation is identified in the data storage device 150 as attending a particular event. For example, the data storage device 150 may include a record that a football team's fan club is attending the team's scheduled games. If the system server 120 determines that the user is a member of the fan club (through any of the methods discussed above or other suitable method) and the date and time that the user contacts the system server 120 correspond to a scheduled game, the system server 120 may determine that the user is attending the game.

In other cases, the membership itself may be location-related, such as being enrolled as a current student at a college. In these embodiments, the system server 120 may determine that the user's membership sufficiently defines his or her location. In other words, the system server 120 may determine that the current student status is sufficient to determine that the user's location corresponds to the school location.

### Location/Attendance Based On Retail Location Selection

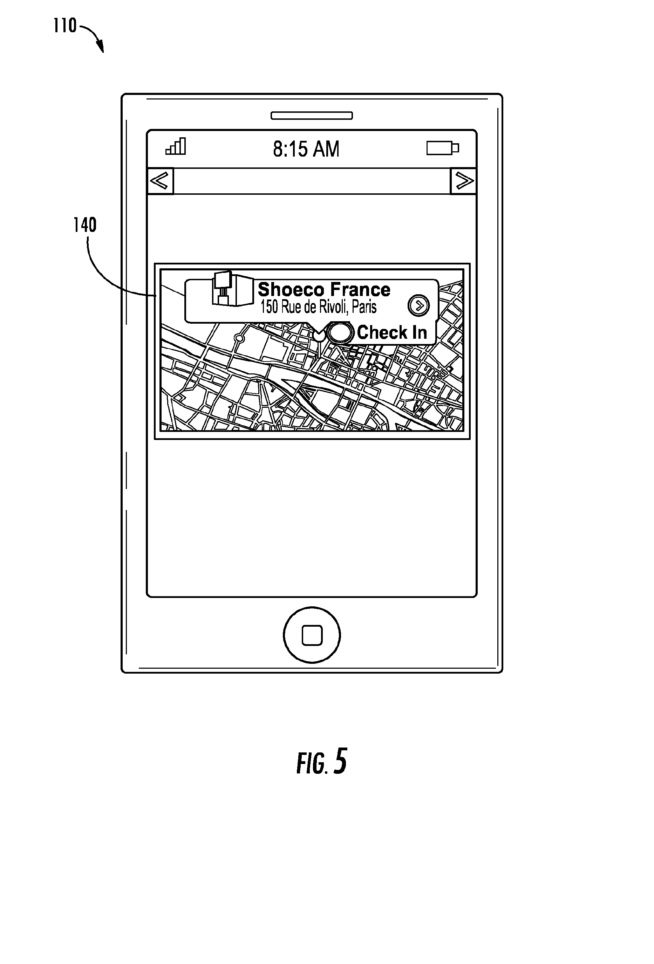

In certain embodiments, the system server 120 may access the data storage device 150 to compile a list of retail locations 180. The system server 120 may then transmit the list of retail locations 180 to the device 110, display them through the user interface 140, and prompt the user to select one or more retail locations 180 that are most convenient or desirable for the user to visit. Once the system server 120 receives the selections, the system server 120 may then prompt the user to check in at the selected retail location 180 or may automatically check the user in at the selected retail location 180. An example user interface 140 showing the selected retail location 180 and prompting the user to check in at that location is shown in FIG. 5.

The system server 120 may determine that the user's selection of and/or check in at a particular retail location 180 is sufficient to determine that the user's location corresponds to the selected retail location 180. The user's selection of and/or check in at a particular retail location 180 may prompt the system server 120 to transmit a map, directions, or other information about the selected retail location 180 to the user interface 140.

The system server 120 may also use a combination of methods to determine the user's location. For example, the system server 120 may use the coordinate signals from the device 110, sales data, transaction data, and/or membership data to determine the user's general vicinity. The system server 120 may then access the data storage device 150 to compile a list of local retail locations 180 within a predefined radius of the user's general vicinity. The system server 120 may then transmit the list of local retail locations 180 to the device 110, display them through the user interface 140, and prompt the user to select one or more local retail locations 180 that are most convenient or desirable for the user to visit. Once the system server 120 receives the selections, the system server 120 may then prompt the user to check in at the selected local retail location 180 (as shown in FIG. 5) or may automatically check the user in at the selected local retail location 180. The user's selection of and/or check in at a particular local retail location 180 may prompt the system server 120 to transmit a map, directions, or other information about the selected local retail location 180 to the user interface 140.

As a further step, the system server 120 may retrieve additional user information, such as fitness data or performance data, from the device 110, from the user account, or from information stored on the data storage device 150 or other locations.

In some embodiments, the user account may include information regarding finish times in certain races, weight loss, strength training, points scored during games, or other fitness achievements. In these embodiments, the system server 120 may access the user account to retrieve this information. Alternatively, the user account may include information regarding how to access fitness information stored on the device 110, other websites, databases, or other electronic media. The system server 120 may access these other locations and/or prompt the user to provide a connection to these other locations so that the system server 120 may retrieve the stored fitness information. In other embodiments, race performance data, sports statistics, or other fitness information may be stored on the data storage device 150. The system server 120 may compare the user's name and/or other identifying information to these collections of information to extract fitness information for the user. In yet other embodiments, the system server 120 may prompt the user to provide fitness information directly to the system server 120 through the user interface 140.

At step 230, the system server 120 may compile a list of available specials based on the user information, such as location, attendance at specified events, and/or the additional information. As part of this step, the system server 120 accesses the data storage device 150, which stores a list of one or more conditions that are required to access each special within the collection of specials. The system server 120 compares the user information to the conditions stored on the data storage device 150 for each special. The system server 120 then compiles a list of available specials, which includes the specials where the system server 120 determined that the user information satisfied the conditions necessary to access that special. In some embodiments, the list of available specials may include a single special or may include more than one special.

In some embodiments, the collection of specials may be associated with particular locations and/or with certain events and, thus, are only accessible when the user is within the specified location or attending the event. In other embodiments, the collection of specials may also be associated with additional conditions, such as achieving certain fitness milestones, participating in certain fitness activities, or otherwise demonstrating certain performance criteria.

For example, a special may be available for everyone in a certain location or attending a certain event, but for people in that location or attending the event that also meet certain fitness-related conditions, the special may have a different color, style, and/or include additional information regarding the fitness conditions.

In some exemplary embodiments, specials associated with a particular city, such as Paris, may be stored in the data storage device 150. If the system server 120 determines that the user is located in Paris, the system server 120 may locate the specials for Paris stored on the data storage device 150, which are then added to the list of available specials.

In other exemplary embodiments, specials for the World Cup may be stored in the data storage device 150. If the system server 120 determines that the user is attending the World Cup, the system server 120 may locate the specials for the World Cup stored on the data storage device 150, which are then added to the list of available specials.

In some exemplary embodiments, specials may be stored in the data storage device 150, which vary depending on whether the user is an attendee, a participant, or a participant with a certain minimum performance. If the system server 120 determines that the user is attending, for example, the Boston marathon through any of the location/attendance methods described above, the system server 120 may access a list of Boston marathon registered participants stored on the data storage device 150 or other storage location. If the user's name or other identifying information corresponds to one of the registered participants, the system server 120 may then access a list of finish times for the Boston marathon stored on the data storage device 150 to determine whether the user completed the race within a specified period of time. Alternatively, the lists of participants and finish times may be accessed simultaneously.

If the user is determined to be a Boston marathon attendee but not a participant, the system server 120 may locate the specials for Boston marathon attendees stored on the data storage device 150, which are then added to the list of available specials. The specials for Boston marathon attendees may have a blue print pattern. If the user is determined to also be a participant, but has a finish time that exceeds maximum finish time, the system server 120 may locate the specials for Boston marathon participants stored on the data storage device 150, which are then added to the list of available specials. The specials for Boston marathon participants may have the same print pattern, but may be printed in red, and/or may also include the user's marathon number. If the user is determined to be a participant with a finish time within the specified time limit, the system server 120 may locate the specials for Boston marathon participants with specified finish times stored on the data storage device 150, which are then added to the list of available specials. The specials for Boston marathon participants with specified finish times may have the same print pattern, but may be printed in green, and/or may also include the user's marathon number and finish time. One of ordinary skill in the art will understand that this is but one exemplary embodiment of the variety of ways in which user information may be used to customize the list of available specials.

In other exemplary embodiments, specials for a college may be stored in the data storage device 150, which may vary depending on whether the user is an alumni, current student, member of one of the college sports teams, academic teams, or other criteria. If the system server 120 determines that the user is located at the college through any of the location methods described above, the system server 120 may access a list of alumnae, registered students, team rosters, club rosters, or other lists associated with various college affiliations, which may be stored on the data storage device 150 or other storage location. If the user's name or other identifying information corresponds to one or more of the various lists, the system server 120 may locate specials for the specific college affiliations stored on the data storage device 150, which are then added to the list of available specials.

The college specials may also vary depending on fitness or performance achievements by the user. For example, the specials may include a condition that requires the user to satisfy certain swimming, track and field, football, baseball, basketball, soccer, tennis, golf, or other suitable athletic or fitness statistics. If the system server 120 determines that the user is located at the college through any of the location determination methods described above, the system server 120 may access a collection of athletic statistics stored on the data storage device 150 or other storage location. If the user's name or other identifying information corresponds to an athlete listed with qualifying statistics, the system server 120 may access the data storage device 150 to locate college specials that correspond to the college and the qualifying athletic performance, which are then added to the list of available specials.

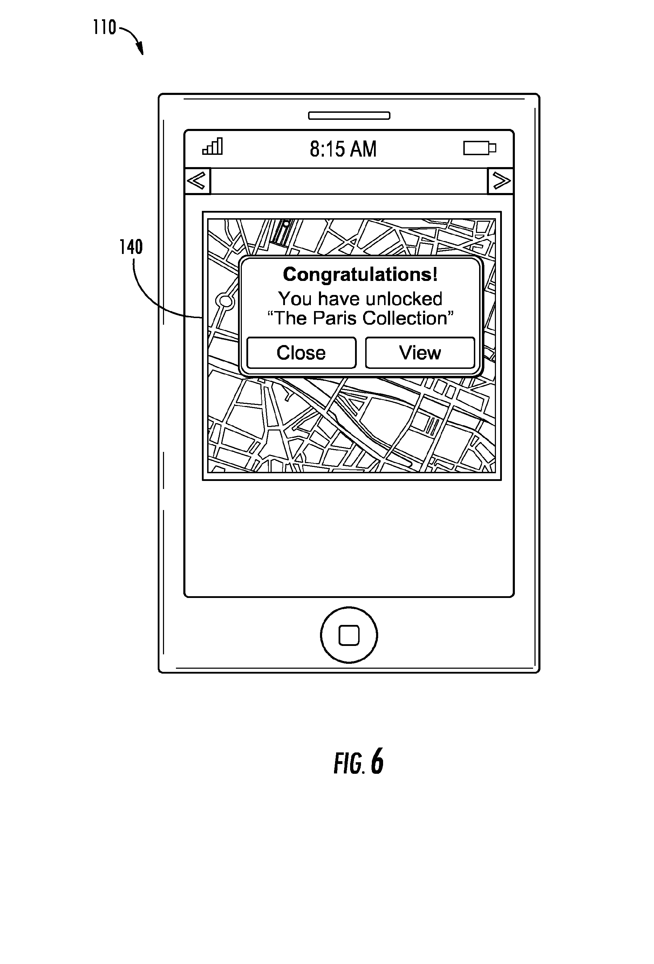

At step 240, the system server 120 may transmit the list of available specials to the device 110 and display them through the user interface 140. The user interface 140 may notify the user that the available specials have been unlocked (as shown in FIG. 6). Unlocked specials may be available for a limited time, unlimited time, in a limited quantity, or an unlimited quantity. Alternatively, the user interface 140 may automatically display the available specials as part of the products 190 and/or customization features offered to the user through the user interface 140.

At step 250, the system server 120 may transmit a collection of products 190 to the device 110 and display them through the user interface 140. The collection of products 190 are displayed on the user interface 140. As further steps, the system server 120 may locate and transmit statistics, physical dimensions, and/or media files for some or all of the collection of products 190 to the device 110. The information may be transmitted automatically with the collection of products 190 or may be transmitted in response to a request from the user.

As a further step, the system server 120 may receive a selection of one or more products 190 from the device 110.

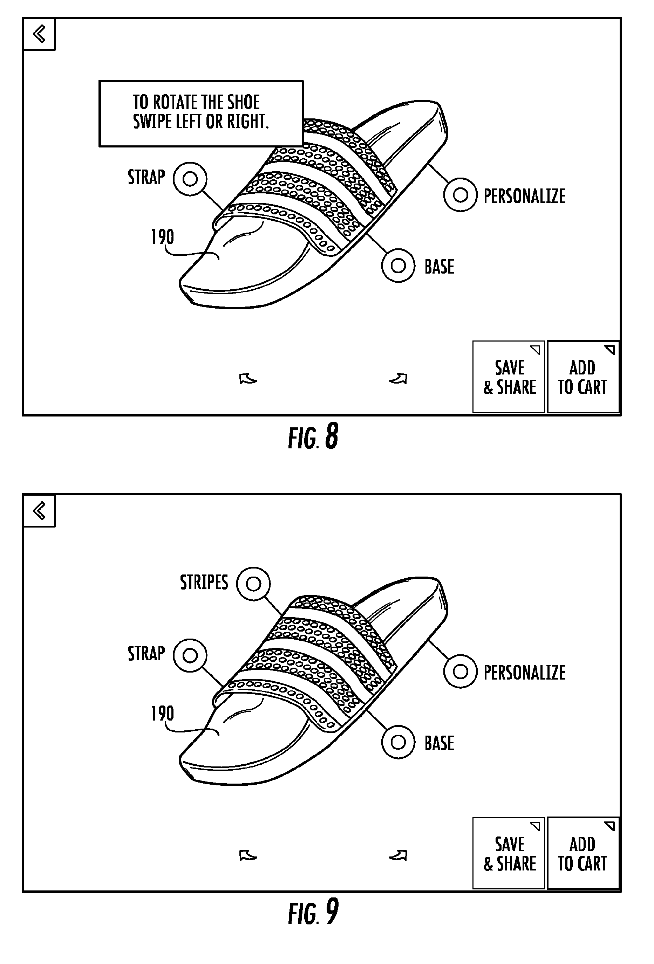

As a further step, the system server 120 may transmit customization features available for the selected products 190 to the device 110. The customization features may be displayed as part of a customization display, such as a product configurator as illustrated in FIGS. 8 and 9, in the user interface 140. The customization display may allow the user to customize various parameters of the selected products 190. Customization options, as previously described, may comprise design features (e.g., color, print, stitching color, embroidery, logos, distinguishing symbols, stripes, base color, personalization with one's name, sports number, personal photos, or other wording), functional features (e.g., type of lacing, substitute Velcro® in place of lacing), material choices, element options (e.g., high heel or low toe), location of feature placement, or a combination thereof. As an additional step, the system server 120 may receive a selection of one or more customization features for the selected products 190 from the device 110.

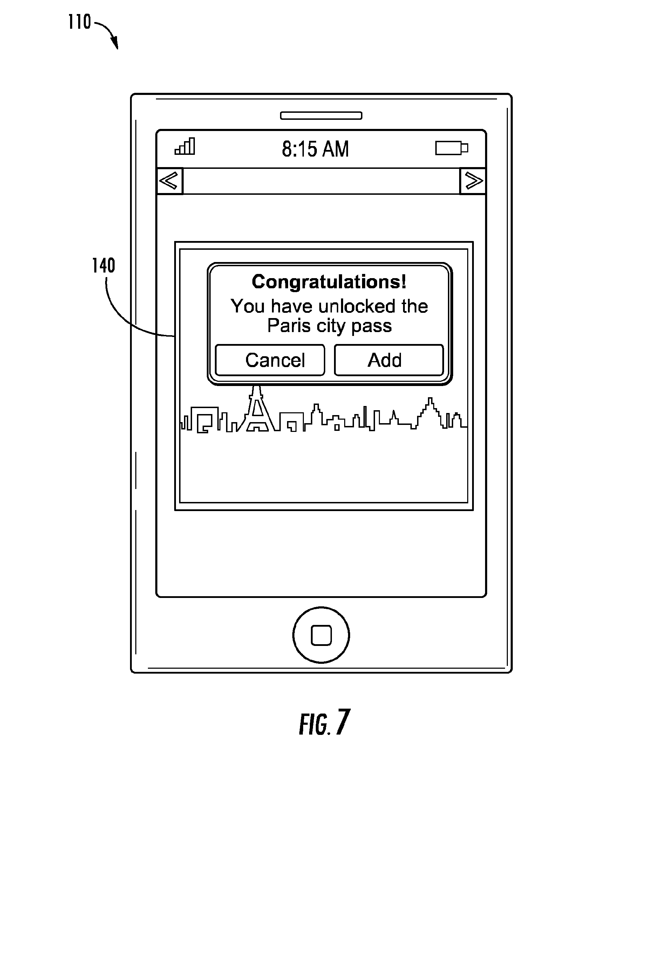

In some exemplary embodiments, as shown in FIG. 7, where the system server 120 determined that the user was located in Paris, the system server 120 transmits customization features that are unique to Paris, such as an image of the Eifel Tower, to the device 110 and display them through the user interface 140. The location-related features may also include features that are fitness or performance related as well. As a result, the user has the option of adding the image of the Eifel Tower to a selected product 190, such as a sandal.

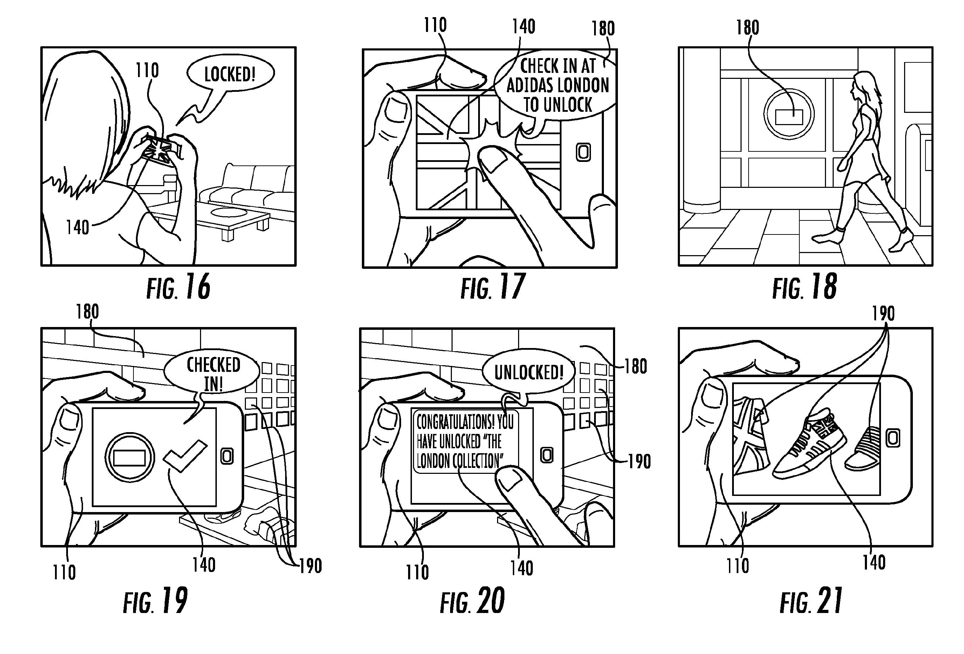

In some additional exemplary embodiments, as illustrated in FIGS. 16-21, the system server 120 may determine that the user is in a particular geographic location, such as London, through any of suitable method described above with respect to step 220. The system server 120 may then transmit one or more retail locations 180 to the device 110, display them through the user interface 140, and prompt the user to visit one or more of the retail locations 180 to unlock the list of available specials and/or the list of available products 190, as shown in FIG. 17. As shown in FIGS. 18-19, once the user reaches the retail location 180, the user checks in at that location, which prompts the system server 120 to unlock and compile the list of available specials, as described in more detail in step 230, transmit the list of available specials and/or the list of available products 190 to the device 110, and display them through the user interface 140, as described in more detail in steps 240 and 250. For example, as shown in FIGS. 21, the system server 120 transmits a list of available products 190 that are unique to the user's location, such as a bag or shoe displaying the UK flag or colors, to the device 110 and displays them through the user interface 140. The location-related features may also include features that are fitness or performance related as well. The user may then customize the selected product 190 and/or order his selection, as described in more detail in step 260.

In other exemplary embodiments, where the system server 120 determined that the user is attending the World Cup, Super Bowl, World Series, golf tournament, Olympic Games, other notable sporting events, music concerts, political events, or other entertainment events with a specified location, date, and/or time, the system server transmits customization features that are unique to that event to the device 110. The event-related features may also include features that are fitness or performance related as well. As a result, the user has the option of adding the unique event features to the selected product 190.

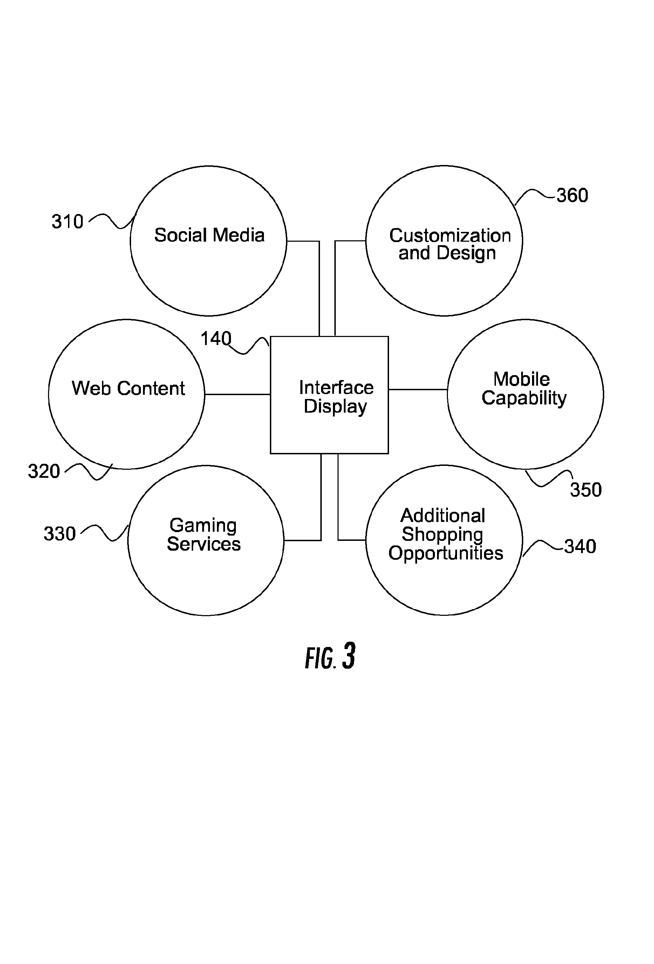

It should be noted that multiple products 190 may be selected and customized. Other customization options are available and are further discussed below with reference to FIG. 3.

As an additional step, the system server 120 may store the product 190 with the customized features in the data storage device 150 or within the user account.

The individualized product 190 is manufactured using individual or premanufactured customized elements that are incorporated into the standard product 190. The product 190 or portions thereof may be assembled or printed according to the selected customized features.

At step 260, the system server 120 may complete a settlement transaction to complete a user purchase of a selected product(s) 190. For example, the user enters their credit card information to the user interface 140 to effectuate a purchase of the selected product 190. Other payment devices may be used (e.g., debit cards, prepaid cards, etc.) and are known to those skilled in the art. In other embodiments, the system server 120 may transmit that the selected products 190 are to be placed on hold at the selected retail location 180 for pick-up by the user.

It should be appreciated that the specific steps illustrated in FIG. 2 provide a particular method of creating the user interactive environment on the retail system 100, according to embodiments of the invention. Other sequences of steps may also be performed according to alternative embodiments. For example, alternative embodiments of the invention may perform the steps outlined above in a different order. Specifically, in certain embodiments, the system server 120 may compile a list of available specials and/or products, which are transmitted to the device 110 and displayed through the user interface 140. Included with the display of available specials and/or products, the user interface 140 may also include an option for the user to check-in, which may in turn prompt the system server 120 to determine the user's location via any of the methods discussed with respect to the step 220. Once the system server 120 has determined the user's location, the list of available specials and/or products displayed may be updated to include location-specific customization features and/or products.

Moreover, the individual steps illustrated in FIG. 2 may include multiple sub-steps that may be performed in various sequences as appropriate to the individual step. Furthermore, additional steps may be added or removed depending on the particular applications. One of ordinary skill in the art would recognize and appreciate many variations, modifications, and alternatives of the method 200.

In some embodiments, the communication between the user and the system server 120 may include other forms of communication in addition to or in lieu of menu-selection style communication. For example, the device 110 may be configured to transmit verbal commands to/from the system server 120 through the user interface 140. In these embodiments, the system server 120 may prompt the user to customize the selected products 190 by asking "How would you like to customize your selected product?" The user may respond by stating, "Change color, add name, add photo, etc." The system server 120 may be configured to recognize these verbal commands and respond accordingly with more specific questions and/or by changing the visual appearance of the selected product 190 on the user interface 140 to correspond to the verbal selection. These are but a few exemplary embodiments illustrating the incorporation of verbal communication between the user and the system server 120. One of ordinary skill in the relevant art will understand that verbal commands may be used as a suitable mode of communication between the user and the system server 120 for any of the steps associated with the methods described herein.

In certain embodiments, as shown in FIG. 3, the user may access social media 310 from the user interface 140. For example, the user can connect to social media pages, post messages from the user interface 140 to their own user profile, share customized products 190, post or share special offers, and post any products 190 on their own social profiles. In some embodiments, the user may access web content 320 including all websites and usage of all services through the user interface 140.

Some embodiments may host gaming services 330 and allow user interaction through the user interface 140. For example, some games may offer special prices or discounts, offer unlockable features of a customizable product 190, or provide in-store entertainment. Games associated with the retail system 100 may be downloaded to devices 110, or the like.

The user interface 140 may offer additional shopping opportunities 340. For example, the data storage device 150 may save viewed products 190 transmitted through the user interface 140 and send the information to a shop assistant for further advice or recommendations. The user interface 140 may offer coupons or special offers when the system server 120 recognizes a return customer (e.g., by user registration). In some embodiments, the user interface 140 may offer auctions or display marketing content for special events with associated special offers. In another embodiment, the user interface 140 provides support for 24 hour shopping.

The retail system 100 has mobile capabilities 350. In certain embodiments, the mobile capabilities 350 include physically transporting the retail system 100 from one location to the next, and sending retail data via mobile communication devices and/or networks. Regarding physical transportation, for example, the retail system 100 (i.e., the user interface 140) may be displayed within a store, in a suitably sized vehicle, or at unconventional locations (airports, sporting events, in desolate areas, etc.). It should be noted that the mobile capabilities may be extended to the external mobile devices and settlement transactions, as described above with reference to FIG. 1.

As described above with respect to FIG. 2, the user may perform detailed customization and design 360 operations to create unique and detailed products 190 on the user interface 140. For example, the user can create a shoe with colors, logos, logo placement, and the like in any desirable configuration within the specifications of the retail system 100. In certain embodiments, the user may enlarge the selected product 190 to provide for detailed customizations and feature placement. The user may further upload the new products 190 to a device (e.g., tablet computer, laptop, or mobile phone) 110 or website.

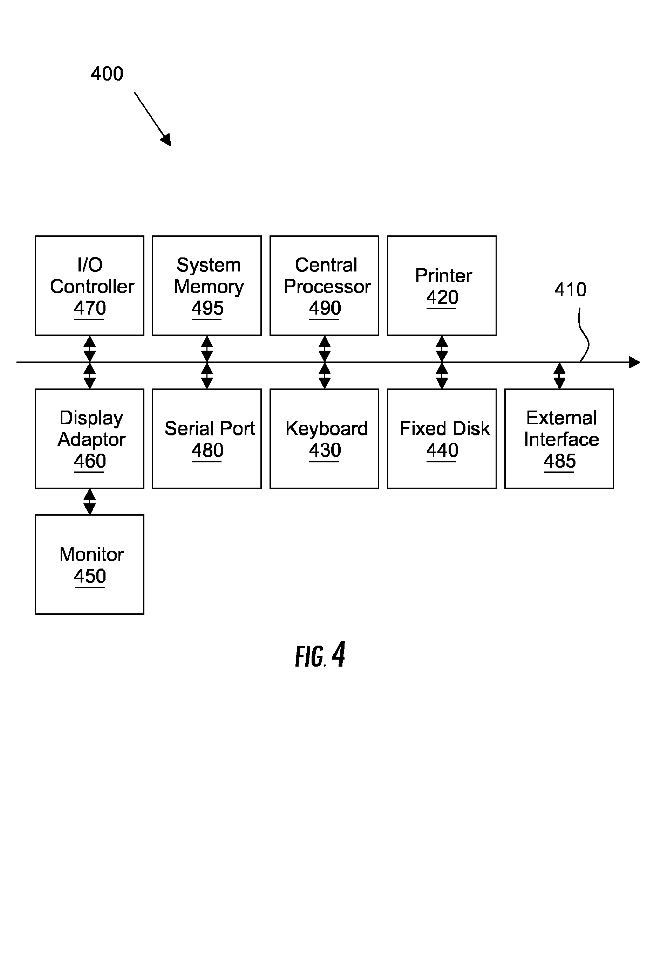

FIG. 4 is a diagram of a computer apparatus 400, according to an example embodiment. The various participants and elements in the previously described system diagrams (e.g., the retail system 100 in FIGS. 1-3) may use any suitable number of subsystems in the computer apparatus 400 to facilitate the functions described herein. Examples of such subsystems or components are shown in FIG. 4. The subsystems shown in FIG. 4 are interconnected via a system bus 410. Additional subsystems such as a printer 420, keyboard 430, fixed disk 440 (or other memory comprising computer-readable media), monitor 450, which is coupled to display adapter 460, and others are shown. Peripherals and input/output (I/O) devices (not shown), which couple to I/O controller 470, can be connected to the computer system by any number of means known in the art, such as serial port 480. For example, serial port 480 or external interface 485 can be used to connect the computer apparatus 400 to a wide area network such as the Internet, a mouse input device, or a scanner. The interconnection via system bus allows the central processor 490 to communicate with each subsystem and to control the execution of instructions from system memory 495 or the fixed disk 440, as well as the exchange of information between subsystems. The system memory 495 and/or the fixed disk 440 may embody a computer-readable medium.

The software components or functions described in this application may be implemented as software code to be executed by one or more processors using any suitable computer language such as, for example, Java, C++ or Perl using, for example, conventional or object-oriented techniques. The software code may be stored as a series of instructions, or commands on a computer-readable medium, such as a random access memory (RAM), a read-only memory (ROM), a magnetic medium such as a hard-drive or a floppy disk, or an optical medium such as a CD-ROM. Any such computer-readable medium may also reside on or within a single computational apparatus, and may be present on or within different computational apparatuses within a system or network.

The invention can be implemented in the form of control logic in software or hardware or a combination of both. The control logic may be stored in an information storage medium as a plurality of instructions adapted to direct an information processing device to perform a set of steps disclosed in embodiments of the invention. Based on the disclosure and teachings provided herein, a person of ordinary skill in the art will appreciate other ways and/or methods to implement the invention.

In embodiments, any of the entities described herein may be embodied by a computer that performs any or all of the functions and steps disclosed.

Any recitation of "a", "an" or "the" is intended to mean "one or more" unless specifically indicated to the contrary.

The above description is illustrative and is not restrictive. Many variations of the invention will become apparent to those skilled in the art upon review of the disclosure. The scope of the invention should, therefore, be determined not with reference to the above description, but instead should be determined with reference to the pending claims along with their full scope or equivalents.

In the following, further examples are described to facilitate the understanding of the invention:
1. A method comprising:
   retrieving user information from a device;
   determining a location of a user based on the retrieved user information;
   compiling a list of available specials based on the location of the user;
   transmitting the list of available specials to the device; and
   transmitting a collection of products to the device.
2. The method of example 1, further comprising:
   retrieving fitness data of the user from a storage location;
   wherein the list of available specials are based on the location of the user and the fitness data.
3. The method of example 1, further comprising:
   retrieving time and date information from the device; and
   determining an attendance of the user at an event based on the location of the user within a predefined radius of an event location;
   wherein the list of available specials is based on the attendance of the user at the event.
4. The method of example 3, further comprising:
   retrieving fitness data of the user from a storage location;
   wherein the list of available specials is based on the attendance of the user at the event and the fitness data.
5. The method of example 1, wherein the list of available specials comprise at least one customization feature.
6. The method of example 5, further comprising:
   receiving a selection of at least one product from the collection of products; and
   receiving a selection of the at least one customization feature for the at least one product.
7. The method of example 6, further comprising:
   completing a settlement transaction to complete a user purchase of the at least one product.
8. The method of example 1, wherein determining the location of the user comprises calculating a location estimate based on coordinate signals, sales data, membership data, or retail location selection.
9. A method comprising:
   retrieving user information from a device;
   determining a location of a user based on the retrieved user information;
   compiling a list of available products and a list of customization features based at least in part on the location of the user;
   transmitting the list of available products and the list of customization features to the device;
   receiving a selection of at least one product from the list of available products;
   receiving a selection of at least one customization feature from the list of customization features for the at least one product;
   incorporating the at least one customization feature into the at least one product; and
   storing the at least one product with the at least one customization feature in memory.
10. The method of example 9, further comprising:
   retrieving fitness data of the user from a storage location;
   wherein the list of available products and the list of customization features are based on the location of the user and the fitness data.
11. The method of example 9, further comprising:
   retrieving time and date information from the device; and
   determining an attendance of the user at an event based on the location of the user within a predefined radius of an event location;
   wherein the list of available products and the list of customization features are based on the attendance of the user at the event.
12. The method of example 11, further comprising:
   retrieving fitness data of the user from a storage location;
   wherein the list of available products and the list of customization features are based on the attendance of the user at the event and the fitness data.
13. A retail system comprising:
   a device;
   one or more processors in communication with the device; and
   memory including instructions that, when executed by the one or more processors, cause the one or more processors to:
      retrieve user information from the device;
      analyze user information retrieved from the device to determine a user location;
      select from a collection of specials one or more available specials based at least in part on the user location; and
      transmit a list of the one or more available specials selected from the collection of specials to the device.
14. The retail system of example 13, wherein the one or more available specials comprise at least one product, wherein the instructions, when executed by the one or more processors, cause the one or more processors to:
   transmit statistics on the at least one product to the device when a user requests statistics;
   transmit physical dimensions of the at least one product to the device when the user requests physical dimensions; and
   transmit media files of the at least one product to the device when the user requests media files.
15. The retail system of example 13, wherein the user can customize features of the at least one product, wherein the features that are customizable include color selection and feature placement.
16. The retail system of example 13, wherein the memory further includes instructions that, when executed by the one or more processors, cause the one or more processors to:
   analyze at least one customization feature selection received for the at least one product;
   incorporate the at least one customization feature into the at least one product; and
   store the at least one product with the at least one customization feature in memory.
17. The retail system of example 13, wherein the memory further includes instructions that, when executed by the one or more processors, cause the one or more processors to:
   analyze time and date information retrieved from the device in combination with the user location to determine an attendance of the user at an event;
   wherein the list of the one or more available specials is based at least in part on the attendance of the user at the event.
18. A computer-readable medium having computer-executable instructions comprising:
   code for retrieving user information from a device;
   code for analyzing user information retrieved from the device to determine a location of the user;
   code for compiling a list of available customization features based at least in part on the location of the user;
   code for transmitting a collection of products to the device;
   code for receiving a selection of at least one product from the collection of products; and
   code for transmitting the list of available customization features for the at least one product to the device in a customization display, wherein the customization display is configured to allow the user to customize features of the at least one product, the features including at least one of a size, color, graphics, location-related features, event-related features, and performance-related features.
19. The computer-executable instructions of example 18, further comprising:
   code for completing a settlement transaction with the user to complete a user purchase of the at least one product.
20. The computer-executable instructions of example 18, further comprising:
   code for analyzing time and date information retrieved from the device to determine whether the user is attending an event.
21. The computer-executable instructions of example 20, wherein the list of available customization features are further based at least in part on the attendance of the user at the event.
22. A computer-implemented method, comprising:
   retrieving user information from a device;
   determining a location of a user based on the retrieved user information;
   compiling a list of available specials based on the location of the user, wherein the list of available specials comprises at least one available special; and
   transmitting the list of available specials to the device;
   wherein the list of specials comprises at least one product and / or at least one customization feature.
23. The method of example 22, further comprising:
   retrieving fitness data of the user from a storage location;
   wherein the list of available specials are based on the location of the user and the fitness data.
24. The method of example 22 or 23, further comprising:
   retrieving time and date information from the device; and
   determining an attendance of the user at an event based on the location of the user within a predefined radius of an event location;
   wherein the list of available specials is based on the attendance of the user at the event.
25. The method of any of the preceding examples 22 - 24, further comprising:
   receiving a selection of the at least one product; and
   receiving a selection of the at least one customization feature for the at least one product.
26. The method of any of the preceding examples 22 - 25, wherein determining the location of the user comprises calculating a location estimate based on coordinate signals, sales data, membership data, and / or retail location selection.
27. The method of any of the preceding examples 22 - 26, further comprising:
   incorporating the at least one customization feature into the at least one product; and
   storing the at least one product with the at least one customization feature in memory.
28. A retail system comprising:
   means for retrieving user information from a device;
   means for analyzing user information retrieved from the device to determine a user location;
   means for selecting from a collection of specials one or more available specials based at least in part on the user location; and
   means for transmitting a list of the one or more available specials selected from the collection of specials to the device.
29. The retail system of example 28, wherein the one or more available specials comprise at least one product, wherein the instructions, when executed by the one or more processors, cause the one or more processors to:
   transmit statistics on the at least one product to the device when a user requests statistics;
   transmit physical dimensions of the at least one product to the device when the user requests physical dimensions; and
   transmit media files of the at least one product to the device when the user requests media files.
30. The retail system of example 28 or 29, wherein the user can customize features of the at least one product, wherein the features that are customizable include color selection and feature placement.
31. The retail system of any of the preceding examples 28 - 30, wherein the memory further includes instructions that, when executed by the one or more processors, cause the one or more processors to:
   analyze at least one customization feature selection received for the at least one product;
   incorporate the at least one customization feature into the at least one product; and
   store the at least one product with the at least one customization feature in memory.
32. The retail system of any of the preceding examples 28 - 31, wherein the memory further includes instructions that, when executed by the one or more processors, cause the one or more processors to:
   analyze time and date information retrieved from the device in combination with the user location to determine an attendance of the user at an event;
   wherein the list of the one or more available specials is based at least in part on the attendance of the user at the event.
33. A computer program comprising instructions for implementing a method in accordance with any of the preceding examples 22 - 27.

## Claims

1. A computer-implemented method, comprising:
retrieving user information from a device;
determining a location of a user based on the retrieved user information;
compiling a list of available specials based on the location of the user, wherein the list of available specials comprises at least one available special; and
transmitting the list of available specials to the device;
wherein the list of specials comprises at least one product and / or at least one customization feature.

2. The method of claim 1, further comprising:
retrieving fitness data of the user from a storage location;
wherein the list of available specials are based on the location of the user and the fitness data.

3. The method of claim 1 or 2, further comprising:
retrieving time and date information from the device; and
determining an attendance of the user at an event based on the location of the user within a predefined radius of an event location;
wherein the list of available specials is based on the attendance of the user at the event.

4. The method of any of the preceding claims 1 - 3, further comprising:
receiving a selection of the at least one product; and
receiving a selection of the at least one customization feature for the at least one product.

5. The method of any of the preceding claims 1 - 4, wherein determining the location of the user comprises calculating a location estimate based on coordinate signals, sales data, membership data, and / or retail location selection.

6. The method of any of the preceding claims 1 - 5, further comprising:
incorporating the at least one customization feature into the at least one product; and
storing the at least one product with the at least one customization feature in memory.

7. A retail system comprising:
means for retrieving user information from a device;
means for analyzing user information retrieved from the device to determine a user location;
means for selecting from a collection of specials one or more available specials based at least in part on the user location; and
means for transmitting a list of the one or more available specials selected from the collection of specials to the device.

8. The retail system of claim 7, wherein the one or more available specials comprise at least one product, wherein the instructions, when executed by the one or more processors, cause the one or more processors to:
transmit statistics on the at least one product to the device when a user requests statistics;
transmit physical dimensions of the at least one product to the device when the user requests physical dimensions; and
transmit media files of the at least one product to the device when the user requests media files.

9. The retail system of claim 7 or 8, wherein the user can customize features of the at least one product, wherein the features that are customizable include color selection and feature placement.

10. The retail system of any of the preceding claims 7 - 9, wherein the memory further includes instructions that, when executed by the one or more processors, cause the one or more processors to:
analyze at least one customization feature selection received for the at least one product;
incorporate the at least one customization feature into the at least one product; and
store the at least one product with the at least one customization feature in memory.

11. The retail system of any of the preceding claims 7 - 10, wherein the memory further includes instructions that, when executed by the one or more processors, cause the one or more processors to:
analyze time and date information retrieved from the device in combination with the user location to determine an attendance of the user at an event;
wherein the list of the one or more available specials is based at least in part on the attendance of the user at the event.

12. The method of claim 4 further comprising:
completing a settlement transaction to complete a user purchase of the at least one product.

13. A computer-readable medium having computer-executable instructions comprising:
code for retrieving user information from a device;
code for analyzing user information retrieved from the device to determine a location of the user;
code for compiling a list of available customization features based at least in part on the location of the user;
code for transmitting a collection of products to the device;
code for receiving a selection of at least one product from the collection of products; and
code for transmitting the list of available customization features for the at least one product to the device in a customization display, wherein the customization display is configured to allow the user to customize features of the at least one product, the features including at least one of a size, color, graphics, location-related features, event-related features, and performance-related features.

14. The computer-executable instructions of claim 13, further comprising:
code for completing a settlement transaction with the user to complete a user purchase of the at least one product.

15. A computer program comprising instructions for implementing a method in accordance with any of the preceding claims 1 - 6 and 12.
